# EUROPEAN PATENT SPECIFICATION

(11) **EP 1 718 128 B1**
(45) Date of publication and mention of the grant of the patent: **26.01.2011**
(21) Application number: 04727208.3
(22) Date of filing: 14.04.2004
(51) Int. Cl.: H05B 41/00, H05B 41/04, H05B 41/288

(54) **ELECTRONIC CONTROLLER FOR HIGH POWER GAS DISCHARGE LAMP**
ELEKTRONISCHE STEUERUNG FÜR EINE HOCHLEISTUNGS-GASENTLADUNGSLAMPE
UNITE DE COMMANDE ELECTRONIQUE POUR LAMPE A DECHARGE GAZEUSE HAUTE PUISSANCE

(30) Priority: 17.02.2004 CN 200410016366
(43) Date of publication of application: 02.11.2006
(73) Proprietor: Lou, Fanglu, Pan An County Zhejiang 322300 (CN)
(72) Inventor: YANG, Luoding, Pan An County,Zhejiang 322300 (CN)
(74) Representative: Liesegang, Eva
(86) International application number: PCT/CN2004/000349
(87) International publication number: WO 2005/081588

(56) References cited:
- CN-A- 1 318 968
- CN-Y- 2 168 387
- GB-A- 2 147 750
- US-A- 4 672 300
- US-A1- 2002 074 953
- US-B1- 6 362 575

## Description

### Technical Field

The present invention relates to a control device for illuminating lamp, a controller for high-power gas discharging lamp. The present invention is particularly fitted to be applied on high-power dysprosium, indium, silent, natrium, metal halide bulb, cold cathode luminous tube.

### Background Art

The rating voltage of gas discharging lamp is generally 80V-150V, but the current supply is 220V It is required to decrease the current supply from 220V to 80-150V for usage. At the same time, the bulb must be provided with the step down, the current limiting and the protective device of equivalent power. The inductance low frequency choke is the most adoption at the present time, but it has large cubage, heavy weight, high loss, low power factor, big noise, heavy interference, low illumination quality and its voltage, current and power is out of control.

Patent no. 98218196.5, the adaptive controller for strong intensity gas discharging lamp, achieves light changes by changing inductance coil and inductive capacity. Like conventional inductance manner's performance of energy consumption, noise, power factor, voltage, current, and start-up, it has high energy consumption, heavy interference and its power, voltage and current are apt to be affected by circuitry voltage fluctuation, so it is not fitted to be applied on high-power gas discharging lamp.

Patent no. 01264335.1, the high power-factor electronic ballast for controlling high-power gas discharging lamp, tough provides a kind of all electronic ballast which can increases power factor of discharging lamp and is energy saving, low-cost, high lighting quality and has a long service life. But it does not work effectively if the power of the lamp is high. Because of the insufficient of the pulse time and pulse amplitude, if there is exterior voltage fluctuation, the lamp is difficult to be started up, it even can't be lighted. Lack of the high-power start-up trigger lighting circuit, this electronic ballast is not fitted to be applied on high-power gas discharging lamp, because its poor stability and reliability.

US 6,362,575 B 1 describes a system for regulating the lamp output voltage in a multiple discharge lamp fixture based on monitoring of the lamp filament current. The system comprises a power factor switching circuit including an integrated circuit, an electronic switch and an inductance serially connected to a DC power supply, and a power control circuit including a second integrated circuit, second and third electronic switches, and a shunt resistance serially connected to a second DC power supply having opposite polarity from the first DC power supply, the second integrated circuit controlling the output of the second and third electronic switches.

US 4,672,300 describes a DC power supply for a fluorescent lamp using a potentiometer in a feedback loop for dimming purposes.

US 2002/0074953 A1 describes a controller for a fluorescent lamp including an auxiliary rectifier and an auxiliary power supply, the auxiliary power supply providing separate isolated DC power supply lines for each drive circuit.

GB 2 147 750 A discloses the use of thick film integrated circuits and of MOSFET transistors in the field of discharge lamp circuits.

### Description of the Invention

The technical problems the present invention is to solve are as follows: provide a controller for high-power gas discharging lamp. Not only it is light in weight, compact in cubage, but also its circuit is simple, its cost is low, it has less components, and its installation is very easy. Furthermore, its drive waveform is low distortion and it can work steadily and reliably with constant current, voltage and power. It is particularly fitted to be applied on high-power gas discharging lamp.

The present invention provides an electronic controller for a high-power gas discharge lamp according to claim 1. Preferred embodiments are defined in the dependent claims.

The electronic controller for high-power gas discharging lamp is constituted of the filter circuit, the rectifying circuit, the power factor switching circuit, the driver inversion and power control circuit, the protective circuit of initiating trigger, the output matching circuit and the accessory power supply circuit which are linked sequentially; the feature is that the power factor switching circuit is formed by thick film integration block IC1 linking with the switching tube Q1 and the inductance L4 respectively, wherein the switching tube Q1 is linked with the diode D2 and the resistance R4, R3; the said driver circuit of power inversion control is formed by thick film integration circuit IC2 linking with the switching tube Q3 linked with resistance R4, R3 and voltage regulator tube ZD3, the switching tube Q2 linked with voltage regulator tube ZD1, ZD2, resistance R9, R10, transformer T2 and capacitance C8; the said protective circuit of initiating trigger is formed by thick film integration circuit IC3 linking with capacitance C10, silicon controlled SCR, the diode D4, capacitance C9, C11, inductance L5, and relay JT

Compared with state of the art, the present invention has advantages as follows:

The present invention transforms 50Hz AC power supply into 30KHz higher frequency AC power supply so as to light up the all electronic structure of the lamp. It has compact cubage, its weight is only about 1/4 of the conventional controller's weight and its power factor is so high that it is close to 1. Adopting multilevel common mode, differential mode filter, the filter circuit can lessen the electromagnetic, radiated and conducted interference produced during the on-off switch; it also rejects the interference to the controller, which is caused by input power supply pollution. It is up to the standard of EIECEE (Euro IEC Conformity for Testing and Certification of Electric Equipment). The present invention takes three integrated circuits and this makes it high-integration, less-parts, simple-circuit and low-cost. The accessory power supply circuit supplying power for integrated blocks, works after electric supply passing through the transformer and the voltage regulator tube , thereby having high stability and reliability. By integrated block IC2 driving switching tube Q3, the driving circuit is simple , has low distortion , is able to work with constant current , constant voltage , constant power and has the capability of working steadily under short circuit ,open circuit and abnormal condition. It also has a special start-up trigger circuit. Thereby, it is particularly fitted to be applied on high-power gas discharging lamp and it has high power factor, long service life, and high quality of lighting, and it is up to electromagnetic compatibility standard and the environmental protection demands.

### Description of the Drawings

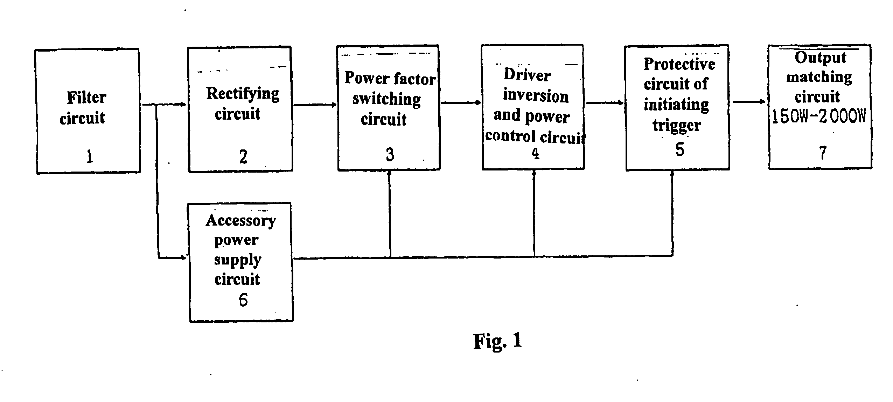

Fig.1 is the block diagram of the present invention.

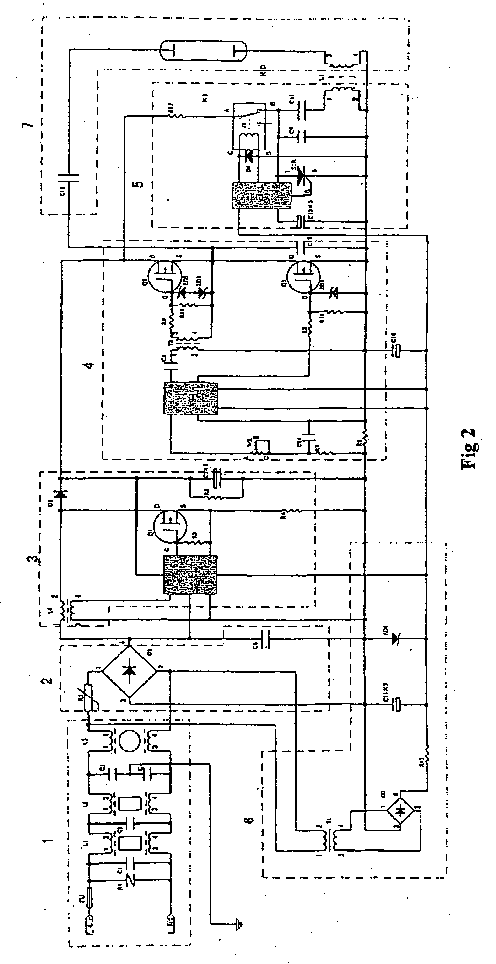

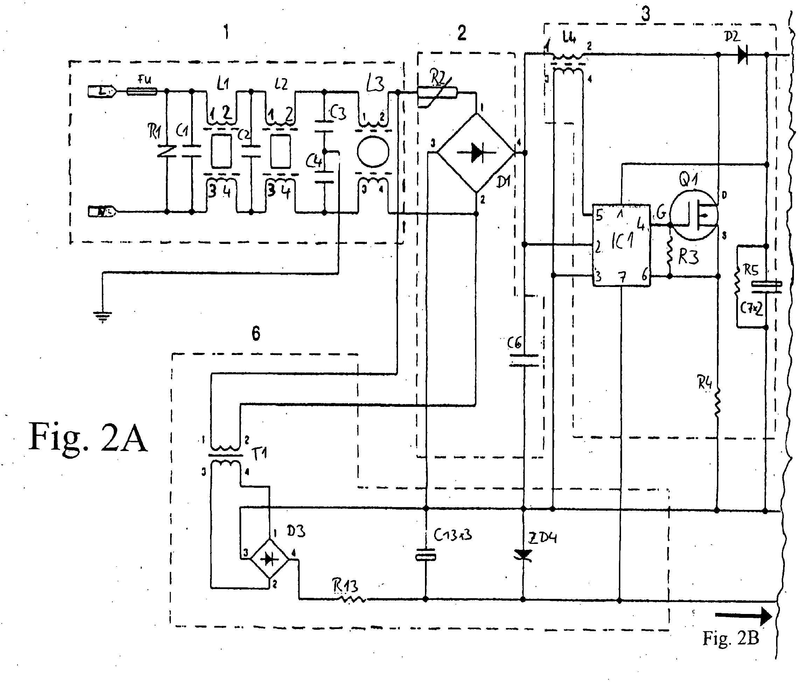

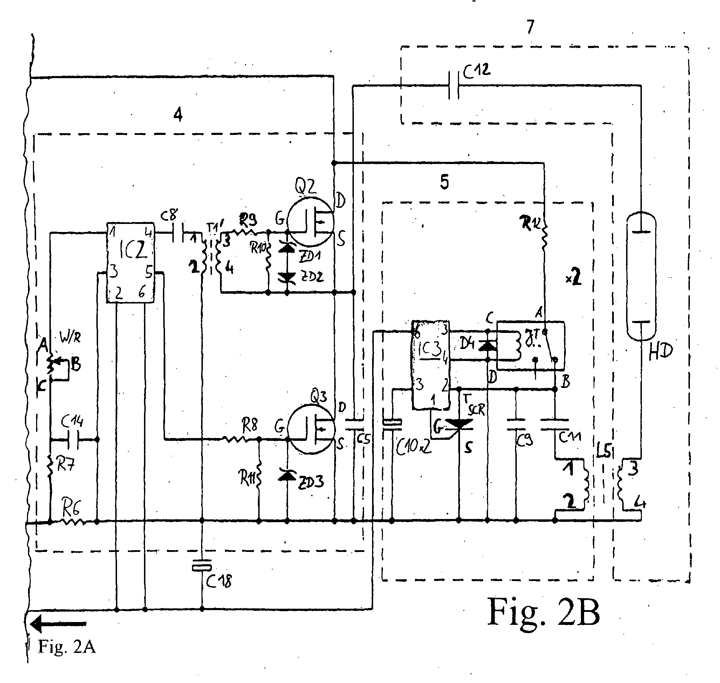

Fig.2 is the circuit diagram of the present invention.

### Description of the particular Embodiment

Hereinafter, a preferred embodiment of the invention will be described in detail with reference to the accompanying drawings.

Block 1 is the filter circuit. At the instant of switch on, there will be surge voltage occurred on the circuit. R1, the piezoresistor, can absorb the transient surge voltage and protects the circuit from transient high voltage impulsion; R2, the NTC thermistor, is used to suppress the transient surge current of power supply and achieves soft startup. The multilevel common mode, differential mode filter, made up of the capacitance C1, C2, C3, C4 and the inductance L1, L2, L3, works bilaterally, lessening the electromagnetic, radiated and conducted interference produced during the on-off switch and rejecting the interference to the controller, which is caused by input power supply pollution.

The filter circuit 1 is linked to FU protector tube from L end by phase conductors; the other end of the FU protector is linked to the R1, C1 and the 1 end of L1; the zero conductor N is linked to the R1, C1 and the 3 end of L1; the 2 end of L1 is linked to the C2 and the 1 end of L2; the other end of C2 is linked to the 4 end of L1; the 2 end of L2 is linked to the C3 and the 1 end of L3; the 4 end of L2 is linked to the C4 and the 3 end of L3; the other end of C3 is linked to the other end of C4 and is grounded.

Block 2 is the rectifying circuit. D1, the bridge rectifier, is used to transform AC into DC, which supplies the circuit after filtrated by C6.

The rectifying circuit 2 is that the 2 end of L3 is linked to one end of R2 and the 1 end of transformer T1; the other end of R2 is linked to the 1 end of D1; the 3 end of D1 is linked to the cathode of C13x3; the 4 end of D1 is linked to the 2^{nd} pin of IC1 and so on; the 4 end of L3 is linked to the 2 end of D1 and then is linked to the 2 end of transformer 2.

Block 3 is the power factor switching circuit. IC1 is thick film integration circuit. Its main function is to increase the power-factor and control the voltage and current of Q1. Sampled from the auxiliary winding of L4, the current signal is sent to the 5^{th} pin of IC1; sampled from the junction of D2 and C7, the voltage signal is sent to the 1^{st} pin of IC1, and the feedback signal, sampled from the R4, is sent to the 6^{th} pin of IC1. The parallel connection switching power supply, made up of voltage boosting inductance L4, field effect transistor Q1, Q2, boosts the rectified 200V DC up to 395V DC. After performing smoothed filter, C7 decreases the ripple current furtherly. The discharging resistance R5, absorbing the charging and discharging peak current, balances the tolerance of the electrolytic capacitor.

The power factor switching circuit 3 is that the 1^{st} pin of IC1 is linked to the anode of diode D2, R5 and the anode of C5, and is also linked to the D electrode of Q2; the 2^{nd} pin of IC1 is linked to C6, the 4^{th} end of D1 and the 1 end of L4; the 4^{th} pin of IC1 is linked to the other end of R3; the S electrode of Q1 is linked to one end of R4, the other end of R4 is linked to one end of R5; the cathode of C7 is linked to one end of R6; the 7^{th} pin of IC1 is linked to R13 and so on; the 2 end of L4 is linked to the cathode of D2 and the D electrode of Q1.

Block 4 is the driver inversion and power control circuit. IC2 is thick film integration circuit for driver and power control. The signal got by WR potentiometer, R7 and C14 from the current sampling resistance R6, accesses to the 1^{st} and 3^{rd} pin of IC2 and is compared in IC2. The comparison signal is sent into the IC2 and controls the 4^{th} and 5^{th} output signal. C8 is coupling capacity and T2 is driving transformer. R8 and R9 are current limiting resistances. R10 and R11 are clamp resistances. ZD1, ZD2, ZD3 voltage regulation diode protect the G electrode of Q2, Q3 field effect transistor on forward direction and backward direction. Q2 and Q3 are made up of the half bridge switching circuit, which changes the DC working voltage to AC voltage about 30 Hz supplying power for the bulb. The BC end of the WR potentiometer is linked to C14 and R7 and by adjusting the WR potentiometer, the power can be adjusted from a few W up to thousand W.

The driver inversion and power control circuit 4 is made up that the other end of R7 is linked to the other end of R6, R4 and R5, the cathode of C7x2, the 3^{rd} pin of IC1, the 3 end of L4, the other end of C6, the cathode of voltage regulator tube ZD4, the cathode of C13x3 and C18 and the 3 end of bridge rectifier; the 3^{rd} pin of IC2 is linked to the other end of C14; the other end of R6, the 2 end of T2, the cathode of C18, the R11 and the cathode of ZD3, the S electrode of Q3 and one end of C15 are linked together; the 2^{nd} and 6^{th} pin of IC2 are linked to the anode of C18; the 4^{th} pin of IC2 is linked to C8, the other end of C8 is linked to the 1 end of T2; the 5^{th} pin of IC2 is linked to R8, the other end of R8 is linked to R11, the anode of ZD3 and the G electrode of Q3; the 3 end of T2 is linked to R9, the other end of R9 is linked to the anode of R10 and ZD1 and the G electrode of Q2; the 4 end of T2 is linked to the other end of R10, the anode of ZD2, the S electrode of Q2, the D electrode of Q3, C15 and C12, the cathode of ZD1 is linked to the cathode of ZD2; the D electrode of Q2 is linked to R12 and the anode of D2.

Block 5 is the protective circuit of initiating trigger. IC3 is start-up trigger thick film integrated circuit. High frequency AC charges C11 through R12 and then the C11 discharges. The discharge voltage is coupled from the auxiliary winding to the main winding which supplies start-up voltage for the bulb. When the bulb is lighted, JT relay will cut off the working voltage automatically, C9, C11 and SCR will lost power and the circuit steps into voltage stabilization. C15 absorbs pulse spike and the C10 is RC time constant capacitance.

The protective circuit of initiating trigger 5 is made up that the 1^{st} pin of IC3 is linked to the G electrode of SCR; the 2^{nd} pin of IC3 is linked to the T electrode of SCR, C9, C11 and the B electrode of JT; the 3^{rd} pin of IC3 is linked to the G electrode of JT and the anode of D4; the 4^{th} pin of IC3 is linked to the D electrode of JT and the cathode of D4, then linked to the S electrode of SCR, the cathode of C10x2, the other end of R9, the 2 and 4 end of L5; the 1 end of L5 is linked to the other end of C11; the 5^{th} pin of IC3 is linked to the anode of C10x2; the 6^{th} pin of IC3 is linked to the anode of C18 and so on; the A electrode of JT is linked to R12x2; the other end of R12 is linked to the D electrode of Q2, the anode of D2 and so on.

Block 6 is the accessory power supply circuit Switchingin from block 1 and 2, transformed by T1 and rectified by D3, it outputs 15V voltage from the filter circuit; filtrated by RC circuit made up of R13 and C13, stabilized by voltage regulated diode, the output is then sent to each integrated circuit, supplying current for IC1, IC2 and IC3.

The accessory power supply circuit 6 is made up that the 1 end of transformer T1 is linked to the 2 end of L3 and R2; the 2 end of T 1 is linked to the 2 end of D1 and the 4 end of L3; the 3 end of T1 is linked to the 2 end of bridge rectifier D3; the 4 end of T1 is linked to the 1 end of D3; the 3 end of D3 and the 3 end of D1, the cathode of C13x3 and C18, he cathode of voltage regulator tube ZD4, the 3^{rd} pin of IC1, the 3 end of L4, the cathode of R4, C7x2, R6, R7 are linked together to form the preposition common ground channel; the 4 end of D3 is linked to R13, the other end of R13 is linked to the anode of C13x3, the anode of ZD4, the 7^{th} pin of IC1, the 2^{nd}, 6^{th} pin of IC2, the 6^{th} pin of IC3 are linked together to form a low voltage operational power supply channel..

Block 7 is the output matching circuit, which is made up of the capacitance C13, the ID bulb and the inductance auxiliary winding L15. The ID bulb can be cold cathode luminous tube and many types of dysprosium, indium, silent, natrium, metal halide bulb and so on.

The output matching circuit 7 is made up that C12 is linked to C15, the S electrode of Q2, the D electrode of Q3 and so on; the other output end of C12 is linked to ID bulb; the 4 end of L5 is linked to the 2 end of L5, C9, the S electrode of SCR and so on; the 3 output end of L5 is linked to the other end of ID bulb.

After switch-on, 50Hz AC accesses to the filter circuit from block 1 and R1 will absorb the transient surge voltage from the power supply. The three levels common mode, differential mode combination filter, made up of L1-L3, C1-C3, rejects the interference from input power supply and local device bilaterally so as to make the electromagnetic compatibility up to the international standard of the USA, Euro and so on.

After filtrated, the power supply divides into two; one accesses to block 6, the other one accesses to block 2 and then is rectified into DC about200 V

The block 3 is to realize voltage stabilization, current stabilization and power factor emendation by controlling the switching tube Q1.

The input DC voltage signal is sent to the 2^{nd} pin of IC2 and the output DC signal is sent to the 1^{st} pin of IC1. When the voltage of the input power supply is changed, the input and output voltage signal will be compared in IC1. The benchmark in IC1 will react and the 4^{th} pin of IC1 will output the result voltage signal, which controls the switching tube so as to achieve voltage stabilization.

The direct current inputs from the 1 end and outputs from the 2 end of L4. Inducted to the 3 and 4 end of L4, the current signal performs process and analysis in IC1. Then, the 4^{th} pin of IC1 outputs control signal so as to achieve current stabilization.

Through L4, Q1, ZD1, the operating voltage is increased, the phase of the voltage is increased, the voltage phase is in the wake of the current phase and the power factor is increased near to 1. The stable output of power supply is sent to block 4.

Block 4 is to realize voltage driver inversion and power control. IC2 outputs the high frequency oscillation signal produced inside from the 4^{th} pin. Coupled by C8, isolated and matched by T2, the output signal drives Q2 on. The 5^{th} pin directly couples to Q3 with current limiting through R8 and drives Q3 on. Working in turn in the up half period and the down half period, Q3 transforms the stable DC voltage into high frequency AC voltage, and the inversion frequency is set in IC2.

When power loading or the power of the bulb is changed, the current of the whole circuit is changed accordingly. R6 is the current sampling resistance of the whole device. The sampling signal is sent through R7from one end of R6. The signal on the other end of R6 is send to the 3^{rd} pin of IC3. A part of signal, passing through the connection point of R7 and C14, is sent to WR. Adjusted by WR, the signal is sent to the 1^{st} pin of TC3. After process in IC3, the signal is outputted from the 4^{th} pin of IC2 to control the output value of Q2 and Q3. Through this way, the loading ability of the circuit is changed according to the change of the loading.

Block 5 is the protective circuit of initiating trigger. The high frequency AC power supply is sent to tube by Q2 and Q3 through block 7 and blocking capacitor C12. The high DC voltage, controlled by R12, charges C11 through JT normally closed contact. After the accomplishment of the charging, C11 discharges through L5. At this time, the winding between 1 and 2 pin of L5 produces induced electromotive force, which induces the winding between 3 and 4 pin to produce higher trigger voltage, lighting the tube. When the tube is lighted, the C and D end of JT get the electricity, JT is attracted and the protective circuit of initiating trigger is closed. If the tube is chugged or the load is wear out failure, JT is still closed and C11 doesn't get the trigger voltage, so there is no discharging process and L5 has no induced voltage, the lamp can't be lighted and the circuit is protected. Because of the variance of power and feature of variant tubes, there is a set of oscillation switching signals in IC3. Accessed by these signals through the 1^{st} and 2^{nd} pin of IC3, the silicon controlled produces a pulse train, which triggers the bulb on in succession. If there exist lamp holder creepage, cap corruption, glass shell cracking or any failure, C9 will feedback signal to IC3, IC3 will stop outputting pulse train and thereby the circuit is protected. After the failure is removed, IC3 will start up again.

The input operating voltage ranges from 150 to 250 V, the operating frequency range from 50 to 60 Hz, and the operating power ranges from 150 to 2000 W.

In one aspect of the invention the electronic controller for high-power gas discharging lamp is constituted of the filter circuit, the rectifying circuit, the power factor switching circuit, the driver inversion and power control circuit, the protective circuit of initiating trigger, the output matching circuit and the accessory power supply circuit which are linked sequentially; the feature is that the power factor switching circuit is formed by thick film integration block IC1 linking with the switching tube Q1 and the inductance L4 respectively, wherein the switching tube Q1 is linked with the diode D2 and the resistance R4, R3; the said driver circuit of power inversion control is formed by thick film integration circuit IC2 linking with the switching tube Q3 linked with resistance R4, R3 and voltage regulator tube ZD3, the switching tube 2 linked with voltage regulator tube ZD1, ZD2, resistance R9, R10, transformer T2 and capacitance C8; the said protective circuit of initiating trigger is formed by thick film integration circuit IC3 linking with capacitance C10, silicon controlled SCR, the diode D4, capacitance C9, C11, inductance L5, and relay JT.

In one embodiment of the invention; the electronic controller includes the feature that the filter circuit 1 is linked to FU protector tube from L end by phase conductors; the other end of the FU protector is linked to the R1, C1 and the 1 end of L1; the zero conductor N is linked to the R1, C1 and the 3 end of L1; the 2 end of L1 is linked to the C2 and the 1 end of L2; the other end of C2 is linked to the 4 end of L1; the 2 end of L2 is linked to the C3 and the1 end of L3; the 4 end of L2 is linked to the C4 and the 3 end of L3; the other end of C3 is linked to the other end of C4 and is grounded.

In another embodiment of the invention, the electronic controller includes the feature that the rectifying circuit 2 is that the 2 end of L3 is linked to one end of R2 and the 1 end of transformer T1; the other end of R2 is linked to the 1 end of D1; the 3 end of D1 is linked to the cathode of C13x3; the 4 end of D1 is linked to the 2^{nd} pin of IC1 and so on; the 4 end of L3 is linked to the 2 end of D1 and then is linked to the 2 end of transformer 2.

In a further embodiment of the invention, the electronic controller includes the feature that the power factor switching circuit 3 is that the 1^{st} pin of IC1 is linked to the anode of diode D2, R5 and the anode of C5, and is also linked to the D electrode of Q2; the 2^{nd} pin of IC1 is linked to C6, the 4^{th} end of D1 and the 1 end of LA; the 4^{th} pin of IC1 is linked to the other end of R3; the S electrode of Q1 is linked to one end of R4, the other end of R4 is linked to one end of R5; the cathode of C7 is linked to one end of R6; the 7^{th} pin of IC1 is linked to R13 and so on; the 2 end of L4 is linked to the cathode of D2 and the D electrode of Q1.

Preferably, the electronic controller according to the invention includes the feature is the driver inversion and power control circuit 4 are made up that the other end of R7 is linked to the other end of R6, R4 and R5, the cathode of C7x2, the 3^{rd} pin of IC1, the 3 end of L4, the other end of C6, the cathode of voltage regulator tube ZD4, the cathode of C13x3 and C18 and the 3 end of bridge rectifier; the 3^{rd} pin of IC2 is linked to the other end of C14; the other end of R6, the 2 end of T2, the cathode of C18, the R11 and the cathode of ZD3, the S electrode of Q3 and one end of C15 are linked together; the 2^{nd} and 6^{th} pin of IC2 are linked to the anode of C18; the 4^{th} pin of IC2 is linked to C8, the other end of C8 is linked to the 1 end of T2; the 5^{th} pin of IC2 is linked to R8, the other end of R8 is linked to R11, the anode of ZD3 and the G electrode of Q3; the 3 end of T2 is linked to R9, the other end of R9 is linked to the anode of R10 and ZD1 and the G electrode of Q2; the 4 end of T2 is linked to the other end of R10, the anode of ZD2, the S electrode of Q2, the D electrode of Q3, C15 and C12, the cathode of ZD1 is linked to the cathode of ZD2; the D electrode of Q2 is linked to R12 and the anode of D2.

Advantageously, the electronic controller according to the invention includes the feature that the protective circuit of initiating trigger 5 is made up that the 1^{st} pin of IC3 is linked to the G electrode of SCR; the 2^{nd} pin of IC3 is linked to the T electrode of SCR, C9, C11 and the B electrode of JT; the 3^{rd} pin of IC3 is linked to the G electrode of JT and the anode of D4; the 4^{th} pin of IC3 is linked to the D electrode of JT and the cathode of D4, then linked to the S electrode of SCR, the cathode of C10x2, the other end of R9, the 2 and 4 end of L5; the 1 end of L5 is linked to the other end of C11; the 5^{th} pin of IC3 is linked to the anode of C10x2; the 6^{th} pin of IC3 is linked to the anode of C18 and so on; the A electrode of JT is linked to R12x2; the other end of R12 is linked to the D electrode of Q2, the anode of D2 and so on.

Favorably, the electronic controller according to the invention includes the feature that the accessory power supply circuit 6 is made up that the 1 end of transformer T1 is linked to the 2 end of L3 and R2; the 2 end of T 1 is linked to the 2 end of D1 and the 4 end of L3; the 3 end of T 1 is linked to the 2 end of bridge rectifier D3; the 4 end of T1 is linked to the 1 end of D3; the 3 end of D3 and the 3 end of D1, the cathode of C13x3 and C18, he cathode of voltage regulator tube ZD4, the 3^{rd} pin of IC1, the 3 end of L4, the cathode of R4, C7x2, R6, R7 are linked together to form the preposition common ground channel; the 4 end of D3 is linked to R13, the other end of R13 is linked to the anode of C13x3, the anode of ZD4, the 7^{th} pin of IC1, the 2^{nd}, 6^{th} pin ofIC2, the 6^{th} pin of IC3 are linked together to form a low voltage operational power supply channel..

In another equally preferable embodiment of the invention, the electronic controller includes the feature that the output matching circuit 7 is made up that C12 is linked to C15, the S electrode of Q2, the D electrode of Q3 and so on; the other output end of C12 is linked to ID bulb; the 4 end of L5 is linked to the 2 end of L5, C9, the S electrode of SCR and so on; the 3 output end of L5 is linked to the other end of ID bulb.

## Claims

1. An electronic controller for a high-power gas discharging lamp (HD), comprising:
a power factor switching circuit (3) comprising a first integrated circuit (IC1), a first electronic switch (Q1) and an inductance (L4) serially connected to a first DC-supply line having an auxiliary winding providing a first current signal to the first integrated circuit (IC1); and
a driver inversion and power control circuit (4) connected to an output of the a power factor switching circuit (3), the driver inversion and power control circuit (4) including: a second integrated circuit (IC2), a second electronic switch (Q2) and a third electronic switch (Q3), a shunt resistance (R6), the shunt resistance (R6) being serially connected to a second DC-supply line having the opposite polarity of the first DC-supply line, the shunt resistor providing a second current signal, the second integrated circuit (IC2) controlling an output of the second and the third electronic switching devices (Q2, Q3) depending on said second current signal;
**characterized in that**
the driver inversion and power control circuit (4) comprises a potentiometer (WR), wherein a portion of the second current signal is provided to the second integrated circuit (IC2) via the potentiometer (WR) adjusting the portion of said second current signal that is provided to the second integrated circuit (IC2), and that
the electronic controller further comprises:
a protective circuit (5) connected to the driver inversion and power control circuit (4), the protective circuit (5) comprising: a third integrated circuit (IC3), an output inductance (L5) and a relay (JT), the third integrated circuit (IC3) controlling the opening of the relay (JT) connecting the output inductance (L5) and the output of the power factor switching circuit(s), whereby an auxiliary winding of the output inductance (L5) is adapted to be connected in series to a discharging lamp, the relay (JT) thereby controlling the connection between the output of the power factor switching circuit(s) and the output inductance (L5).

2. The electronic controller according to claim 1, further comprising:
a filter circuit (1) for symmetrically filtering an AC-supply voltage comprising an output outputting a filtered AC-supply voltage; and a rectifying circuit (2) having an input connected to the output of the filter circuit (1) and outputting a rectified DC-supply voltage to the first and second DC-supply lines, whereby
the rectifying circuit (2) comprises a NTC-thermistor (R2) connected to the output of the filter circuit (1), and the filter circuit (1) comprises a piezoresistor (R1) connected in parallel to an input of the filter circuit (1) for receiving the AC-supply voltage, the piezo resistor (R1) being adapted to absorb transient surge voltages and to protect the circuit from transient high voltages of the AC-supply voltage.

3. The electronic controller of claim 1 or 2, further comprising a silicon controlled rectifier (SCR) controlled by the third integrated circuit (IC3) and connected to the output inductance (L5).

4. The electronic controller according to one of the preceding claims, in which the driver inversion and power control circuit (4) further comprises a first and a second voltage regulator diode (ZD1, ZD2) connected in series in anti-parallel directions connecting a gate terminal and a source terminal of the second electronical switching device (Q2) and
a third voltage regulator diode (ZD3) connecting a gate terminal and a source terminal of the third electronical switch (Q3).

5. The electronic controller according to claim 2, further comprising an accessory power supply circuit (6) comprising a transformer (T1), a rectifier (D3) and a voltage regulator circuitry (R13; C13x3; ZD4), wherein the transformer receives a supply voltage from the filter circuit (1) the accessory power supply circuit (6) supplying the integrated circuits (IC1, IC2, IC3) with electrical power.

6. The electronic controller according to one of the claims, further comprising capacitance (C11), the auxiliary winding of the output inductance being in magnetic connection to the output inductance (L5), the capacitance (C11) being serially connected between the relay (JT) and the output inductance (L5);
the driver inversion and power control circuit (4) further comprising:
a serial resistance (R8) connecting the second integrated circuit (IC2) with the gate terminal of the third electronic switch (Q3), and
a serial capacitance (C8) and a matching transformer (T1'), the serial capacitance (C8) connecting the matching transformer (T1') with the second integrated circuit, the matching transformer further comprising an output being connected to the gate terminal of the second electronic switch (Q2) by another serial resistance (R9).

7. The electronic controller according to one of the preceding claims, in which the integrated circuits (IC1, IC2, IC3) are formed of thick film integrated circuits and the electronic switches are formed of tubes or MOSFET-transistor.

## Patentansprüche

1. Elektronische Steuereinrichtung für eine Hochleistungs-Gasentladungs-Lampe (HD) mit:
- einem Leistungsfaktor-Umschalt-Schaltkreis (3), der einen ersten integrierten Schaltkreis (IC1), einen ersten elektronischen Schalter (Q1) und eine Induktivität (L4) aufweist, welche zu einer ersten Gleichstrom-Versorgungsleitung mit einer Hilfswicklung, die ein erstes Stromsignal an den ersten integrierten Schaltkreis (IC1) liefert, in Reihe geschaltet ist; und
- einem Treiber-Inversions- und Leistungssteuerschaltkreis (4), der mit einem Ausgang des Leistungsfaktor-Umschalt-Schaltkreises (3) verbunden ist, wobei der Treiber-Inversions- und Leistungssteuerschaltkreis (4) umfasst: einen zweiten integrierten Schaltkreis (IC2), einen zweiten elektronischen Schalter (Q2) und einen dritten elektronischen Schalter (Q3), einen Shunt-Widerstand (R6), wobei der Shunt-Widerstand (R6) mit einer zweiten Gleichstrom-Versorgungsleitung, welche die zur ersten Gleichstrom-Versorgungsleitung entgegengesetzte Polarität hat, in Reihe geschaltet ist und ein zweites Stromsignal vorsieht, wobei der zweite integrierte Schaltkreis (IC2) einen Ausgang des zweiten und des dritten elektronischen Schalters (Q2, Q3) abhängig von dem zweiten Stromsignal steuert;
**dadurch gekennzeichnet, dass**
- der Treiber-Inversions- und Leistungssteuerschaltkreis (4) ein Potentiometer (WR) umfasst, wobei ein Teil des zweiten Stromsignals an den zweiten integrierten Schaltkreis (IC2) über das Potentiometer (WR) geliefert wird und der Teil des zweiten Stromsignals, der an dem zweiten integrierten Schaltkreis (IC2) geliefert wird, eingestellt wird, und dass
- die elektronische Steuereinrichtung ferner umfasst:
einen Schutzschaltkreis (5), der mit dem Treiber-Inversions- und Leistungssteuerschaltkreis (4) verbunden ist, wobei der Schutzschaltkreis (5) umfasst: einen dritten integrierten Schaltkreis (IC3), eine Ausgangsinduktivität (L5) und ein Relais (JT), wobei der dritte integrierte Schaltkreise (IC3) das Öffnen des Relais (JT) steuert, wobei die Ausgangsinduktivität (L5) und der Ausgang des Leistungsfaktor-Umschalt-Schaltkreises verbunden werden, wobei eine Hilfswicklung der Ausgangsinduktivität (L5) dazu geeignet ist, mit einer Entladungslampe in Reihe geschaltet zu werden, wobei das Relais (JT) **dadurch** die Verbindung zwischen dem Ausgang des Leistungsfaktor-Umschalt-Schaltkreises und der Ausgangsinduktivität (L5) steuert.

2. Elektronische Steuereinrichtung nach Anspruch 1, mit ferner:
einem Filterschaltkreis (1) zum symmetrischen Filtern einer Versorgungs-Wechselspannung mit einem Ausgang zum Ausgeben einer gefilterten Versorgungs-Wechselspannung; und einem Gleichrichterschaltkreis (2) mit einem Eingang, der mit dem Ausgang des Filterschaltkreises (1) verbunden ist, der eine gleichgerichtete Versorgungs-Gleichspannung an die erste und die zweite Gleichstrom-Versorgungsleitung ausgibt, wobei
der Gleichrichterschaltkreis (2) einen NTC-Thermistor (R2) umfasst, der mit dem Ausgang des Filterschaltkreises (1) verbunden ist, und der Filterschaltkreis (1) einen Piezowiderstand (R1) aufweist, der zu einem Eingang des Filterschaltkreises (1) parallel geschaltet ist, um die Versorgungs-Wechselspannung zu empfangen, wobei der Piezowiderstand (R1) dazu geeignet ist, vorübergehende Spannungspitzen zu absorbieren und den Schaltkreis gegen vorübergehende hohe Spannungen der Versorgungs-Wechselspannung zu schützen.

3. Elektronische Steuereinrichtung nach Anspruch 1 oder 2, mit ferner einem siliziumgesteuerten Gleichrichter (SCR), der von dem dritten integrierten Schaltkreis (IC3) gesteuert wird und mit der Ausgangsinduktivität (L5) verbunden ist.

4. Elektronische Steuereinrichtung nach einem der vorangehenden Ansprüche, wobei der Treiber-Inversions- und Leistungssteuerschaltkreis (4) ferner eine erste und eine zweite Spannungsregeldiode (ZD1, ZD2) umfasst, welche antiparallel in Reihe geschaltet sind, um einen Gateanschluss und einen Sourceanschluss des zweiten elektronischen Schalters (Q2) zu verbinden, sowie
eine dritte Spannungsregeldiode (ZD3), die einen Gateanschluss und einen Sourceanschluss des dritten elektronischen Schalters (Q3) verbindet.

5. Elektronische Steuereinrichtung nach Anspruch 2, mit ferner einem Zusatz-Leistungsversorgungsschaltkreis (6), der einen Transformator (T1), einen Gleichrichter (D3) und einen Spannungsregelschaltkreis (R13; C13x3; ZD4) aufweist, wobei der Transformator eine Versorgungsspannung von dem Filterschaltkreis (1) empfängt und der Zusatz-Leistungsversorgungsschaltkreis (6) die integrierten Schaltkreise (IC1, IC2, IC3) mit elektrischer Leistung versorgt.

6. Elektronische Steuereinrichtung nach einem der vorangehenden Ansprüche, mit ferner einer Kapazität (C11), wobei die Hilfswicklung der Ausgangsinduktivität in magnetischer Verbindung mit der Ausgangsinduktivität (L5) ist und die Kapazität (C11) zwischen dem Relais (JT) und der Ausgangsinduktivität (L5) in Reihe geschaltet ist; wobei der Treiber-Inversions- und Leistungssteuerschaltkreis (4) ferner umfasst:
einen Serienwiderstand (R8), der den zweiten integrierten Schaltkreis (IC2) mit dem Gateanschluss des dritten elektronischen Schalters (Q3) verbindet, und
eine Serienkapazität (C8) und einen Abgleichtransformator (T1'), wobei die Serienkapazität (C8) den Abgleichtransformator (T1') mit dem zweiten integrierten Schaltkreis verbindet und der Abgleichtransformator ferner einen Ausgang umfasst, der mit dem Gateanschluss des zweiten elektronischen Schalters (Q2) über einen weiteren seriellen Widerstand (R9) verbunden ist.

7. Elektronische Steuereinrichtung nach einem der vorangehenden Ansprüche, wobei die integrierten Schaltkreise (IC1, IC2, IC3) aus integrierten Dickfilmschaltkreisen gebildet sind und die elektronischen Schalter aus Röhren oder MOSFET-Transistoren gebildet sind.

## Revendications

1. Contrôleur électronique pour une lampe à décharge gazeuse de haute puissance (HD), comprenant :
un circuit de commutation de facteur de puissance (3) comprenant un premier circuit intégré (IC1), un premier commutateur électronique (Q1), et une inductance (L4) connectée en série sur une première ligne d'alimentation en courant continu, comportant un enroulement auxiliaire fournissant un premier signal de courant au premier circuit intégré (IC1) ; et
un circuit d'inversion de pilote et de commande de puissance (4) connecté à une sortie du circuit de commutation de facteur de puissance (3), le circuit d'inversion de pilote et de commande de puissance (4) comprenant : un deuxième circuit intégré (IC2), un deuxième commutateur électronique (Q2) et un troisième commutateur électronique (Q3), une résistance shunt (R6), la résistance shunt (R6) étant connectée en série sur une deuxième ligne d'alimentation en courant continu de la polarité opposée à celle de la première ligne d'alimentation en courant continu, la résistance shunt fournissant un deuxième signal de courant, le deuxième circuit intégré (IC2) contrôlant une sortie des deuxième et troisième dispositifs de commutation électronique (Q2, Q3) en fonction du deuxième signal de courant ;
**caractérisé en ce que**
le circuit d'inversion de pilote et de commande de puissance (4) comprend un potentiomètre (WR), une partie du deuxième signal de courant étant fournie au deuxième circuit intégré (IC2) par l'intermédiaire du potentiomètre (WR) réglant la partie du deuxième signal de courant qui est fournie au deuxième circuit intégré (IC2), et **en ce que**
le contrôleur électronique comprend en outre :
un circuit de protection (5) connecté au circuit d'inversion de pilote et de commande de puissance (4), le circuit de protection (5) comprenant : un troisième circuit intégré (IC3), une inductance de sortie (L5) et un relai (JT), le troisième circuit intégré (IC3) commandant l'ouverture du relai (JT) connectant l'inductance de sortie (L5) et la sortie du circuit de commutation de facteur de puissance, dans lequel un enroulement auxiliaire de l'inductance de sortie (L5) est adapté pour être connecté en série avec une lampe à décharge, le relai (JT) commandant ainsi la connexion entre la sortie du circuit de commutation de facteur de puissance et la sortie de l'inductance (L5).

2. Contrôleur électronique selon la revendication 1, comprenant en outre :
un circuit de filtrage (1) pour filtrer de façon symétrique une tension d'alimentation alternative, comprenant une sortie fournissant une tension d'alimentation alternative filtrée, et un circuit redresseur (2) ayant une entrée connectée à la sortie du circuit de filtrage (1) et fournissant une tension d'alimentation continue redressée aux première et deuxième lignes d'alimentation en courant continu, dans lequel
le circuit redresseur (2) comprend une thermistance NTC (R2) connectée à la sortie du circuit de filtrage (1), et le circuit de filtrage (1) comprend une piézorésistance (R1) connectée en parallèle sur l'entrée du circuit de filtrage (1) pour recevoir la tension d'alimentation alternative, la piézorésistance (R1) étant adaptée pour absorber des pointes de tension transitoires et pour protéger le circuit de tensions transitoires élevées dans la tension d'alimentation alternative.

3. Contrôleur électronique selon la revendication 1 ou 2, comprenant en outre un redresseur commandé par silicium (SCR) commandé par le troisième intégré (IC3) et connecté à l'inductance de sortie (L5).

4. Contrôleur électronique selon l'une quelconque des revendications précédentes, dans lequel le circuit d'inversion de pilote et de commande de puissance (4) comprend en outre des première et deuxième diodes de régulation de tension (ZD1, ZD2) connectées en série tête-bêche, connectant une borne de grille et une borne de source du deuxième dispositif de commutation électronique (Q2), et
une troisième diode de régulation de tension (ZD3) connectant une borne de grille et une borne de source du troisième commutateur électronique (Q3).

5. Contrôleur électronique selon la revendication 2, comprenant en outre un circuit d'alimentation auxiliaire (6) comprenant un transformateur (T1), un redresseur (D3) et un circuit régulateur de tension (R13 ; C13x3 ; ZD4), dans lequel le transformateur reçoit une tension d'alimentation du circuit de filtrage (1), le circuit d'alimentation auxiliaire (6) fournissant aux circuits intégrés (IC1, IC2, IC3) une alimentation électrique.

6. Contrôleur électronique selon l'une quelconque des revendications précédentes, comprenant en outre un condensateur (C11), l'enroulement auxiliaire de l'inductance de sortie étant en couplage magnétique avec l'inductance de sortie (L5), le condensateur (C11) étant connecté en série entre le relai (JT) et l'inductance de sortie (L5) ;
le circuit d'inversion de pilote et de commande de puissance (4) comprenant en outre :
une résistance série (R8) connectant le deuxième circuit intégré (IC2) à la borne de grille du troisième commutateur électronique (Q3), et
un condensateur série (C8) et un transformateur d'adaptation (T1'), le condensateur série (C8) connectant le transformateur d'adaptation (T1') au deuxième circuit intégré, le transformateur d'adaptation comprenant en outre une sortie connectée à la borne de grille du deuxième commutateur électronique (Q2) par une autre résistance série (R9).

7. Contrôleur électronique selon l'une quelconque des revendications précédentes, dans lequel les circuits intégrés (IC1, IC2, IC3) sont constitués de circuits intégrés à couche épaisse et les commutateurs électroniques sont constitués de tubes ou de transistors MOSFET.
